# EUROPÄISCHE PATENTSCHRIFT

(11) **EP 2 277 370 B1**
(45) Veröffentlichungstag und Bekanntmachung des Hinweises auf die Patenterteilung: **03.04.2013**
(21) Anmeldenummer: 10007337.8
(22) Anmeldetag: 15.07.2010
(51) Int. Cl.: A01D 78/10

(54) **Kreiselschwader**
Rotary rake
Andain gyroscopique

(30) Priorität: 23.07.2009 DE 102009034422
(43) Veröffentlichungstag der Anmeldung: 26.01.2011
(73) Patentinhaber: Kverneland A/S, 4355 Kvernaland (NO)
(72) Erfinder: Eder, Josef, 94491 Hengersberg (DE)
(74) Vertreter: Grünecker, Kinkeldey, Stockmair & Schwanhäusser

(56) Entgegenhaltungen:
- EP-A1- 0 706 751
- EP-A2- 2 113 164
- DE-A1- 10 317 812

## Beschreibung

Die Erfindung betrifft einen Kreiselschwader der im Oberbegriff des Patentanspruchs 1 angegebenen Art.

Bei dem aus EP 0 706 751 A bekannten Kreiselschwader mit drei Kreiseln, bei dem der hintere Hubarm unter einem fixierten Winkel schräg gegenüber dem Längsträger orientiert ist, beträgt die maximalen Arbeitsbreite nur geringfügig mehr als das Zweifache des Umlaufbahn-Außendurchmessers. Die Umlaufbahnen der zwei vorderen Kreisel berühren nahezu die durch den Längsträger definierte Vertikalebene des Fahrwerks. Aufgrund des extrem kleinen Zwischenabstandes wird das Erntegut von den zwei vorderen Kreiseln in der Mitte unter dem Längsträger stark konzentriert, so dass der hintere Kreisel zur Bildung eines gleichmäßigen Seitenschwades das Erntegut unerwünscht intensiv zu bearbeiten hat. Die fixierte Schrägstellung des hinteren Hubarmes zu einer Seite resultiert bei Kurvenfahrt abhängig von der Kurvenrichtung zu deutlich unterschiedlichen Schwadverhältnissen. Gegebenenfalls entfällt bei einer Kurvenrichtung sogar die Überdeckung zwischen dem hinteren Kreisel und einem vorderen Kreisel. Das Manövrieren ist speziell bei Rückwärtsfahrt schwierig. In der Transportstellung bei ausgehobenen Kreiseln verlagert der ausladende hintere Kreisel den Schwerpunkt unzweckmäßig zu einer Seite (Kippgefahr). Das Fahrwerk ist lang und beeinträchtigt die Wendigkeit.

Bei dem aus DE 41 03 507 A bekannten Kreiselschwader mit drei Kreiseln beträgt die maximale Arbeitsbreite ebenfalls nur geringfügig mehr als das Zweifache des Umlaufbahn-Außendurchmessers. Der hintere Hubarm ist parallel zum Längsträger ausgerichtet, lässt sich jedoch quer zum Längsträger aus einer mittigen Position in eine einseitig versetzte Position verstellen. Das Fahrwerk ist lang und schwer mit hoher Gewichtskonzentration am hinteren Längsträgerende. Die Mechanik der Verschiebbarkeit des hinteren Hubarmes ist störungsanfällig. Ferner lässt sich der hintere Kreisel aus einer mittigen Lage nur zu einer Seite verlagern, was bei Kurvenfahrt zu deutlich unterschiedlichen Schwadverhältnissen abhängig von der Kurvenrichtung führt und gegebenenfalls die erforderliche Überdeckung beseitigt.

Bei dem aus EP 0 485 698 A bekannten Kreiselschwader mit drei Kreiseln ist jeder Kreisel gegenüber dem vorhergehenden in Arbeitsfahrtrichtung nach hinten versetzt. Der in Arbeitsfahrtrichtung vorderste Kreisel ist an einer Seite des Längsträgers, der mittlere Kreisel ist in der Längsebene des Längsträgers, und der hinterste Kreisel ist an der gegenüberliegenden Seite des Längsträgers angeordnet. Es lässt sich mit dieser Anordnung eine maximale Arbeitsbreite erzielen, die etwa dem Zweieinhalbfachen des Umlaufbahn-Außendurchmessers entspricht. Jedoch bedingt das Anordnungsprinzip der drei Kreisel, dass das von dem vordersten Kreisel geförderte Erntegut von den zwei weiteren Kreiseln noch zweimal bearbeitet wird, was im letztendlich geformten Schwad zu einer unerwünschten Zopfbildung führen kann. Das Fahrwerk ist u.a. zweckmäßig lang und beeinträchtigt die Wendigkeit. Bei Kurvenfahrt ergeben sich in einer Kurvenrichtung problematische Überdeckungsverhältnisse zwischen den Kreiseln. Speziell der hintere Kreisel ist weit zur Seite ausladend platziert, was das Manövrieren erschwert, z.B. auch bei Rückwärtsfahrt, und die Kippgefahr erhöht. Der mittlere Kreisel kann Bodenunebenheiten nicht zufriedenstellend folgen, da er die von den Bodenlaufrädern des Längsträgers übertragenen Vertikalbewegungen mitmacht. Außerdem ist der mittlere Kreisel in der Transportstellung anfällig für Bodenkontakt.

Mit der EP 2 113 164 A mit älterem Zeitrang wird in Fig. 3 ein Kreiselschwader mit drei Schwadkreiseln vorgeschlagen, bei dem sich in zumindest einer Arbeitsstellung zwischen den Umlaufbahnen der beiden vorderen Schwadkreisel ein relativ großer Zwischenabstand einstellen lässt. Da jedoch die Bodenlaufräder am Längsträger nicht lenkbar sind, ergeben sich bei Kurvenfahrten gegebenenfalls unzweckmäßige oder fehlende Überlappungen mit dem hinteren Schwadkreisel oder muss der hintere Schwadkreisel permanent an den Kurvenradius angepasst querverstellt werden.

Weiterer Stand der Technik ist zu finden in DE 199 16 759 A, DE 198 37 955 A, DE 20 2004 008 500 U1, DE 77 14 504 U, DE 103 17 812 A, DE 41 03 507 A und EP 485 698 A.

Aus EP 1 364 573 A ist schließlich ein Kreiselschwader mit zumindest vier Kreiseln bekannt, der eine maximale Arbeitsbreite ermöglicht, die nahezu der Anzahl der Kreisel multipliziert mit deren Umlaufbahn-Außendurchmessern entspricht. Die zwei vorderen Kreisel an beiden Seiten des Längsträgers sind mit nahezu dem doppelten Umlaufbahn-Außendurchmesser beabstandet. Am Hinterende des Längsträgers sind zwei weitere, eng beieinander arbeitende Kreisel mit einer Deichsel angelenkt, die den Zwischenraum zwischen den vorderen Kreiseln bearbeiten. Die vorderen Hubarme sind längenverstellbar, um die Arbeitsbreite variieren zu können.

Der Erfindung liegt die Aufgabe zugrunde, einen Kreiselschwader der eingangs genannten Art anzugeben, der bei schonender Behandlung des Ernteguts mit nur drei Kreiseln eine sehr große Arbeitsbreite ermöglicht und dennoch wendig ist.

Die gestellte Aufgabe wird mit den Merkmalen des Patentanspruchs 1 gelöst.

In Abkehr von dem bei solchen Kreiselschwadern gängigen Prinzip, die zwei vorderen Kreisel möglichst nahe am Längsträger zu platzieren, wird erfindungsgemäß durch den großen Zwischenabstand mit den nur drei Kreiseln insgesamt eine außerordentlich große Arbeitsbreite ermöglicht, wie sie bisher nur von Kreiselschwadern mit mehr als drei Kreiseln und aufwändiger Mechanik erzielbar war. In Arbeitsfahrt mit allen Kreiseln ist die Gewichtsbelastung des Fahrwerks gering und zeichnen sich alle Kreisel durch eine optimale Bodenanpassung aus. Das Fahrwerk lässt sich kurz bauen, so dass der hintere Kreisel relativ nahe bei den zwei vorderen Kreiseln auf den von den zwei vorderen Kreiseln gebildeten Mittelschwad einwirkt und auch bei Kurvenfahrt unabhängig von der Kurvenrichtung die notwendige Überdeckung nicht verloren geht. Der Kreiselschwader ist sowohl bei Arbeitsfahrt als auch bei Transportfahrt wendig und problemlos zu manövrieren, selbst bei Rückwärtsfahrt. Da das Erntegut bis zur Ablage hinter dem hinteren Kreisel nur zweimal bearbeitet wird, entstehen keine verdrehten Stränge oder Zöpfe im Heu oder Futter. Natürlich lässt sich der Kreiselschwader wahlweise mit einem ausgehobenen vorderen Kreisel oder ausgehobenem hinteren Kreisel betreiben, angepasst an die Verhältnisse auf dem Feld. Dabei sind die Längsträger-Bodenlaufräder lenkbar. Dies ist nicht nur für die Arbeitsfahrt, sondern auch für die Transportfahrt zweckmäßig. Bei Arbeitsfahrt kann unter bestimmten Bedingungen auf dem Feld ein fester Schrägwinkel der Bodenlaufräder des Längsträgers eingestellt sein, so dass der Kreiselschwader sozusagen seitlich versetzt zum Schlepper fährt.

Vorteilhaft beträgt der Zwischenabstand etwa 60 % bis 90 % des Umlaufbahn-Außendurchmessers, um bei maximaler Arbeitsbreite und Kurvenfahrt die Überdeckung sicherzustellen.

Bei einer zweckmäßigen Ausführungsform ist zumindest ein vorderer Hubarm längenverstellbar. Zweckmäßig sind beide vorderen Hubarme teleskopierbar oder als Schwingenkonstruktion ausgebildet, um die maximale Arbeitsbreite innerhalb eines wünschenswerten Bereiches variieren zu können. Die maximale Arbeitsbreite bei in der Länge ausgefahrenen Hubarmen ist besonders zweckmäßig bei wenig oder nur schwach zu fahrenden Kurven, während die kleinere maximale Arbeitsbreite zur Anpassung an die Gegebenheiten auf dem Feld oder bei stärkeren zu fahrenden Kurven zweckmäßig sein kann.

Die Längenverstelleinrichtung des Hubarmes kann mechanisch sein, so dass der Fahrzeugführer Verriegelungen lösen und wieder festsetzen muss. Alternativ kann hierfür wenigstens ein Hydrozylinder vorgesehen sein, so dass Längenverstellungen bequem vom Schlepper aus und auch während der Arbeitsfahrt möglich sind.

Bei einer zweckmäßigen Ausführungsform ist der in Arbeitsfahrtrichtung gesehene Abstand zwischen den vorderen und hinteren Kreiseln so gewählt, dass er etwa dem halben Umlaufbahn-Außendurchmesser entspricht. Dadurch arbeitet der hintere Kreisel sehr nahe bei den zwei vorderen Kreiseln, um bei Kurvenfahrt die erforderliche Überdeckung nicht aufzuheben.

Zweckmäßig weisen zumindest die zwei vorderen Kreisel, gegebenenfalls sogar alle Kreisel, Zinkensteuereinrichtungen auf, um die Zinken der Kreisel bei jedem Umlauf entsprechend verstellen zu können, so dass das Erntegut gezielt bearbeitet wird, und bereits vom Erntegut befreite Bodenflächen von den Zinken nicht nochmals in der entgegengesetzten Richtung bearbeitet werden.

Um den vom hinteren Kreisel gebildeten Schwad sauber und in der gewünschten Breite und damit Verteilung des Ernteguts im Schwad zu begrenzen, kann am hinteren Kreisel oder dessen Hubarm wenigstens ein Schwadformelement angeordnet sein, das sich in Querrichtung und in Fahrtrichtung entsprechend einstellen und wie gewünscht umsetzen lässt.

Bei einer besonders zweckmäßigen Ausführungsform ist zu einer optimalen Spurfolgesteuerung des hinteren Kreisels der hintere Hubarm um eine in etwa in der Längsachse des Längsträgers platzierte, annähernd senkrechte Achse schwenkverstellbar, vorzugsweise mittels eines Hydrozylinders oder/und einer Zwangslenkvorrichtung, die den Lenkeinschlag des Schleppers bei Kurvenfahrt auf den hinteren Hubarm überträgt. Durch die Verschwenkbarkeit des hinteren Hubarmes lässt sich eine Optimierung der Überdeckung mit den vorderen Kreiseln auf beispielsweise 0,5 m bewirken. Wird der hintere Hubarm abhängig vom Lenkwinkel des Schleppers zwangsverstellt, bleibt die notwendige Überdeckung auch bei Kurvenfahrt automatisch eingehalten, was insbesondere für die große Arbeitsbreite aufgrund des großen Zwischenabstandes zwischen den zwei vorderen Kreiseln wichtig ist.

Die maximale Arbeitsbreite aller drei Kreiseln beträgt zwischen etwa 11,0 m und 12,5 m, d.h., bei einem Umlaufbahn-Außendurchmesser der untereinander im Wesentlichen gleich großen Kreisel von annähernd 4,5 m maximal fast das Dreifache des Umlaufbahn-Außendurchmessers.

Dabei ist es zweckmäßig, wenn die Breite eines von den zwei vorderen Kreiseln bildbaren Mittelschwades maximal dem Umlaufbahn-Außendurchmesser entspricht, d.h., vorzugsweise, bei einer maximalen Arbeitsbreite von etwa 11,0 m bis 12,5 m etwa 3,0 m bis 4,5 m misst. Aus diesem Mittelschwad bildet der hintere Kreisel den letztendlich auf dem Feld liegenden Schwad in gewünschter Breite und an der gewünschten Seite. Bei ausgehobenem hinterem Kreisel ist das Erntegut, z.B. Heu oder Futter, in dem breiten Mittelschwad gleichmäßig und mit optimal geringer Dichte verteilt.

Bei einer zweckmäßigen Ausführungsform können die Längsträger-Bodenlaufräder an eine Zwangslenkvorrichtung angeschlossen sein. Dies erhöht die Wendigkeit des Kreiselschwaders bei Arbeitsfahrt und Transportfahrt unabhängig vom momentanen Lenkeinschlag des Schleppers.

Eine zweckmäßige Ausführungsform besitzt eine Zwangslenkvorrichtung mit einem am Längsträger um eine vertikale Achse schwenkbaren Lenkkörper, der beispielsweise mit einem den Längsträger schwenkbar ziehenden Traggestell am Schlepper gekoppelt ist und den Lenkeinschlag direkt oder zumindest in proportionalem Ausmaß überträgt. Der Lenkkörper ist über Spurstangen mit an einem Querträger des Längsträgers schwenkbaren Lenkhebeln der Nachlaufachsen der Längsträger-Bodenlaufräder gekoppelt. Diese Zwangslenkvorrichtung ist baulich einfach und funktionssicher.

Dabei wird, bei einer zweckmäßigen Ausführungsform, der hintere Hubarm mittels der Zwangslenkvorrichtung bei Arbeitsfahrt schwenkverstellt, um trotz der großen maximalen Arbeitsbreite die erforderliche Überdeckung bei Kurvenfahrt, z.B. in der Kurveninnenseite oder Kurvenaußenseite, nicht zu verlieren. Alternativ oder additiv kann der hintere Hubarm zusätzlich über den Hydrozylinder schwenkverstellbar sein, so dass der hintere Hubarm auch bei Geradeausfahrt aus einer Position in etwa in Ausrichtung auf den Längsträger zu jeder Seite schwenkbar ist, einerseits um beispielsweise asymmetrische Überdeckungsverhältnisse mit den beiden vorderen Kreiseln einzustellen, oder eine bestimmte Seite, Dichte und Breite des endgültig gebildeten Schwades. Beispielsweise lässt sich das Zentrum des hinteren Kreisels aus der Mittellage um ca. 0,5 m zu jeder Seite versetzen. Obwohl die Schwenkbarkeit des hinteren Hubarmes bei Geradeausfahrt asymmetrische Überdeckungsverhältnisse mit den beiden vorderen Kreiseln bewusst einstellen lässt, können für eine Kurvenfahrt dann die Überdeckungsverhältnisse in Relation zu den beiden vorderen Kreiseln wiederum symmetrisch werden, auch um sicherzustellen, dass in keinem Fall die Überdeckungen gänzlich beseitigt werden.

Um den hinteren Kreisel optimal nahe hinter den zwei vorderen Kreiseln arbeiten zu lassen, kann sogar der hintere Hubarm längenverstellbar sein. Die Längenverstellbarkeit der Hubarme kann insgesamt auch für die Transportfahrt wichtig sein, um die mit den Hubarmen ausgehobenen Kreisel nur so hoch über den Boden zu platzieren, wie erforderlich, und damit die Kippsicherheit des Fahrwerks zu verbessern.

Im Hinblick auf optimale Wendigkeit des Kreiselschwaders, auch bei Rückwärtsfahrt, oder am Feldrand oder Vorgewende, sollte der in Fahrtrichtung gesehene Abstand zwischen der Anlenkung des Lenkträgers und den Längsträger-Bodenlaufrädern maximal dem zweifachen Umlauf-Außendurchmesser entsprechen, oder sogar noch kürzer sein. Ferner kann es hierbei zweckmäßig sein, die zwei vorderen Kreisel in Fahrtrichtung hinter der Längsmitte des Längsträgers anzuordnen, so dass der in Arbeitsfahrtrichtung gesehene Abstand zwischen den vorderen Kreiseln und dem jeweils hinteren Kreisel optimal kurz ist. Alle drei Kreisel sind relativ zum Längsträger um in etwa horizontale Achsen mit ihren Hubarmen schwenkbar, um eine optimale Bodenanpassung zu erzielen, unabhängig von Fahrbewegungen des Fahrwerks, das bei Arbeitsfahrt im Wesentlichen nur Führungsaufgaben hat.

Im Hinblick auf gute Bodenanpassung kann jeder Kreisel ein übliches Tasträder-Fahrwerk besitzen, z.B. ein Tandemfahrwerk oder ein Fahrwerk mit vier Tasträdern, wobei zweckmäßig die zwei vorderen Kreisel ein Fahrwerk mit zwei hinteren, hinter der Kreiselachse positionierten und weiter beabstandeten Tasträdern und zwei vor der Kreiselachse in beträchtlichem Abstand und nahe beieinander positionierte Tasträder aufweisen, und alle vier Tasträder an einem T-förmigem Fahrwerksträger aufgehängt sind, der an der Kreiselachse oder an einem Kreiselgetriebekasten fest angebracht ist. Von den vier Tasträdern können die beiden vorderen selbstlenkend sein, während die beiden hinteren gegebenenfalls nicht lenkend fest angeordnet sind. In der Transportstellung mit allen Kreiseln in ausgehobener Position befindet sich der Gesamtschwerpunkt des Kreiselschwaders optimal in Fahrtrichtung nahe vor den Längsträger-Bodenlaufrädern, was bei guter Wendigkeit die Kippsicherheit erhöht.

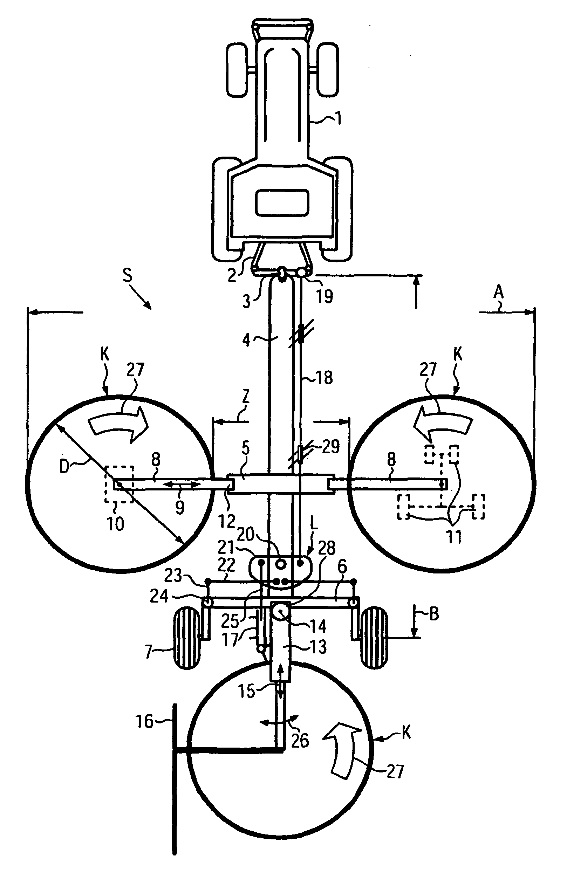

Anhand der Zeichnung wird eine Ausführungsform des Erfindungsgegenstandes erläutert. Fig. 1 zeigt eine schematische Draufsicht auf einen von einem Schlepper gezogenen Kreiselschwader.

Ein in Fig. 1 in schematischer Draufsicht gezeigter, von einem Schlepper 1 gezogener Kreiselschwader S weist drei Kreisel K mit annähernd gleichen Umlaufbahn-Außendurchmessern D von nicht näher hervorgehobenen Zinkentragarmen mit mehreren Zinken an einem Fahrgestell auf, das aus einem Längsträger 4 mit einem fixierten Querträger 6 und daran angeordneten Bodenlaufrädern 7 besteht. Der Längsträger 4 ist um eine annähernd bodensenkrechte Achse 3 schwenkbar an ein Traggestell 2 gekoppelt, das z.B. mit Unterlenkern des Schleppers, z.B. einer nicht näher hervorgehobenen Dreipunkt-Vorrichtung des Schleppers 1, verbunden ist.

In Arbeitsfahrtrichtung (in Fig. 1 nach oben) zurückgesetzt gegenüber der Längsmitte des Längsträgers 4 befindet sich ein nach beiden Seiten vom Längsträger 4 abstehender, fest angebrachter Querträger 5, an dem die zwei vorderen Kreisel K in etwa auf gleicher Höhe über vordere Hubarme 8 aushebbar (über nicht dargestellte Hydrozylinder) angeordnet sind. Die vorderen Hubarme 8 sind beispielsweise um annähernd in Fahrtrichtung liegende Achsen 12 schwenkbar mit dem Querträger 5 gekoppelt. Die zwei vorderen Kreisel K nehmen den Längsträger 4 in der Mitte zwischen sich auf und sind mit ihren Umlaufbahn-Außendurchmessern D mit einem Zwischenabstand Z beiderseits des Längsträgers 4 platziert. Die vorderen Hubarme 8 sind in Richtung eines Doppelpfeils 9 begrenzt längenverstellbar (z.B. teleskopierbar oder als Schwingenkonstruktion), um die maximale Arbeitsbreite A des Kreiselschwaders S innerhalb eines vorgegebenen Bereiches variieren zu können, wobei der Zwischenabstand Z in zumindest einer Arbeitsstellung größer sein kann als etwa der halbe Umlaufbahn-Außendurchmesser D, und bis maximal etwa dem Umlaufbahn-Außendurchmesser D entspricht. Günstig ist ein Zwischenabstand von etwa 60 % bis 90 % des Umlaufbahn-Außendurchmessers D. Wird nur mit den zwei vorderen Kreiseln K ein Mittelschwad erzeugt, können diese beiden Kreisel K auch enger zusammengefahren werden.

Zumindest die zwei vorderen Kreisel K, zweckmäßig auch der hintere Kreisel K, weisen jeweils eine Zinkensteuervorrichtung 10 auf, die an sich bekannt ist. Ferner besitzt jeder Kreisel K (nur beim rechten vorderen Kreisel K gezeigt) ein Fahrwerk mit Tasträdern 11. Dieses Fahrwerk kann einen T-förmigen Fahrwerksträger umfassen, der an der Kreiselachse oder einem nicht gezeigten Kreiselgetriebe fixiert ist, und hinter der Kreiselachse weiter beabstandete, nicht lenkbare Tasträder und in größerem Abstand vor der Kreiselachse näher beieinander platzierte, vorzugsweise lenkbare oder selbstlenkende, Tasträder 11 besitzt. Alternativ könnte auch ein Tandemfahrwerk oder ein anderes Fahrwerk unter jedem Kreisel K angeordnet sein. Der hintere Kreisel könnte ein Fahrwerk mit vier Tasträdern und einem Querträger aufweisen (nicht gezeigt), wobei die beiden Tasträder an einer Seite an einem Pendelachsträger angebracht sein können. Zweckmäßig beträgt bei paarweise angeordneten Zwillings- oder Tandemrädern die Anzahl der Tasträder pro Kreisel vier bis acht. Dabei können einige der Räder starr und/oder nachlaufend angeordnet sein.

Der hintere Kreisel K ist an einem Hubarm 13 angeordnet, der bei der gezeigten Ausführungsform am Querträger 6 um eine annähernd bodensenkrechte Achse 14 in Richtung eines Doppelpfeils 26 hin- und herschwenkbar ist, beispielsweise mittels eines Hydrozylinders 17 (doppelt wirkender Hydrozylinder), der sich am Querträger 6 oder am Längsträger 4 abstützen kann. Der Hubarm 13 kann in Richtung eines Doppelpfeils 15 längenverstellbar sein und dient beispielsweise zur Anbringung eines Schwadelementes 16, dessen Position und Seitenlage in Relation zur Kreiselachse des hinteren Kreisels K wahlweise einstellbar ist. Der hintere Hubarm 13, der über wenigstens einen nicht gezeigten Hydrozylinder um eine annähernd zum Querträger 6 parallele Achse 28 aushebbar ist (für Transportfahrt oder für eine Arbeitsfahrt ohne den hinteren Kreisel K), ist nur so lang, dass der hintere Kreisel K in der Arbeitsstellung sehr nahe hinter der Achse der Längsträger-Bodenlaufräder 7 arbeitet.

Bei der gezeigten Ausführungsform weist der Kreiselschwader S eine Zwangslenkvorrichtung L auf. Diese umfasst ein am, neben oder im Längsträger 4 verlaufendes Koppelglied 18, das einen Anlenkpunkt 19 am Traggestell 2 mit einem Lenkkörper 21 koppelt, der um eine annähernd bodenvertikale Achse 20 am Längsträger 4 hin- und herschwenkbar gelagert ist. Das Koppelglied 18 ist beispielsweise in längsträgerfesten Führungen 29 geführt. Der Lenkkörper 21 ist über Spurstangen 22 mit Lenkhebeln 23 der Längsträger-Bodenlaufräder 7 gekoppelt, wobei z.B. die Lenkhebel 23 um annähernd bodensenkrechte Achsen 24 am Querträger 6 schwenkbar gelagert und die Bodenlaufräder 7 Nachlaufräder sind. Die Zwangslenkvorrichtung L überträgt den Lenkeinschlag des Schleppers 1 bzw. den Knickwinkel zwischen dem Längsträger 4 und dem Traggestell 2 direkt oder proportional auf die Bodenlaufräder 7. Bei einer nicht gezeigten Alternative könnte die Zwangslenkvorrichtung L rein hydraulisch ausgebildet und abhängig vom jeweiligen Lenkwinkel des Schleppers 1 gesteuert werden.

Ferner ist bei der gezeigten Ausführungsform der hintere Hubarm 13, vorzugsweise über den Hydrozylinder 17, ebenfalls mit dem Lenkkörper 21 gekoppelt, so dass Lenkbewegungen direkt oder mit einer vorbestimmten Proportionalität, definiert durch den Hebelarm zwischen einer Ankopplung 25 an den Lenkkörper 21 und der Schwenkachse 20, auf den Hubarm 13 übertragen werden, um den hinteren Kreisel K aus der gezeigten Mittellage (z.B. bei Geradeausfahrt) zur einen oder zur anderen Seite zu verstellen, vor allem, um dank dieser Spurfolgesteuerung die Überdeckung mit einem vorderen Kreisel K nicht zu gefährden.

Pfeile 27 deuten die Drehrichtungen der Kreisel K an. Die zwei vorderen Kreisel K werden gegensinnig und so angetrieben, dass sie vorne zur Mitte fördern. In der in Fig. 1 angedeuteten Arbeitsstellung wird der hintere Kreisel K mit derselben Drehrichtung 27 angetrieben, wie der rechte vordere Kreisel K. Die Drehrichtung des hinteren Kreisels K kann bei Bedarf umgekehrt werden.

Bei einem Umlaufbahn-Außendurchmesser D von etwa 4,5 m beträgt die maximale Arbeitsbreite A etwa 12,5 m, und kann die maximale Arbeitsbreite A durch Längenverstellen der Hubarme 8 bis auf ca. 11,0 m reduziert werden. Der in Arbeitsfahrtrichtung gesehene Abstand B zwischen der Achse der Längsträger-Bodenlaufräder 7 und dem Anlenkpunkt 3 beträgt nur etwa das Zweifache des Umlaufbahn-Außendurchmessers D oder weniger. Durch Schwenkverstellen des hinteren Zugarmes 13 lässt sich die Überdeckung zwischen dem hinteren Kreisel K und einem jeweiligen vorderen Kreisel K beispielsweise um 0,5 m verändern. Die vorderen Hubarme 8, und gegebenenfalls auch der hintere Hubarm 13 sind jeweils um ca. 0,75 m längenverstellbar. Der in Arbeitsfahrtrichtung gesehene Abstand zwischen den zwei vorderen Kreiseln K und dem hinteren Kreisel K ist kleiner als der Umlaufbahn-Außendurchmesser D.

In der in Fig. 1 gezeigten Arbeitsstellung formen die zwei vorderen Kreisel K einen Mittelschwad etwa mit der Breite des Zwischenabstandes Z. Aus diesem Mittelschwad formt der hintere Kreisel K einen linksseitigen Schwad mit einer Breite von ca. 2,0 m oder weniger. Wird der hintere Kreisel K ausgehoben, dann verbleibt der Mittelschwad in einer Breite von etwa 3,0 m bis etwa 4,5 m. Wird die Drehrichtung des hinteren Kreisels K umgekehrt, dann wird ein rechtsseitiger Schwad von etwa 2,0 m Breite oder weniger geformt. Wird der hintere Kreisel K mit seinem Hubarm 13 entgegen dem Uhrzeigersinn maximal verschwenkt, dann entsteht ein endgültiger linksseitiger Schwad in einer Breite von 2,5 m oder geringfügig mehr. Wird der linke vordere Kreisel K ausgehoben, arbeiten nur noch der rechte vordere Kreisel und der hintere Kreisel, der dann zweckmäßig mit seinem Hubarm 13 im Uhrzeigersinn maximal verschwenkt wird, so dass gerade noch eine ausreichende Überdeckung vorliegt und beispielsweise ein linksseitiger Schwad gebildet wird. Die Arbeitsbreite beträgt dann beispielsweise etwa 8,5 m. Werden die beiden vorderen Kreisel K ausgehoben, und der hintere Kreisel K in der in Fig. 1 gezeigten Stellung belassen, dann beträgt die Arbeitsbreite nur mehr etwa 4,5 m, und wird entweder ein linksseitiger oder ein rechtsseitiger Endschwad gebildet, je nach Drehrichtung des hinteren Kreisels K. Zur Transportfahrt werden alle drei Kreisel ausgehoben und arretiert. In Transportfahrt liegt der Schwerpunkt des Kreiselschwaders in etwa bei der Position der Schwenkachse 20, so dass die Belastung ungleichmäßig zwischen der Anlenkung 3 und den Längsträger-Bodenlaufrädern 7 verteilt wird. Die Spurweite der Längsträger-Bodenlaufräder 7 ist zweckmäßig größer als der Abstand der Schwenkachsen 12 der vorderen Hubarme 8, um bei Transportfahrt hohe Kippsicherheit zu erzielen. Ferner sind die Schwenkachsen 12 so weit zueinandergesetzt, dass bei ausgehobenen vorderen Hubarmen 8 in der maximalen Aushebestellung die vorgeschriebene Transportbreite eingehalten bleibt.

Wenn, wie gezeigt, über die Kopplung 25 der hintere Hubarm 13 mit der Zwangslenkvorrichtung L gekoppelt ist, kann der Hydrozylinder 17 hydraulisch blockiert sein, oder kann alternativ der Hydrozylinder 17 individuell gesteuert werden. Zum Ausheben des hinteren Kreisels K wird, zweckmäßig, der Hydrozylinder 17 vorübergehend in eine Schwimmstellung geschaltet.

## Patentansprüche

1. Kreiselschwader (S) mit drei an einem Fahrwerk angeordneten Kreiseln (K) mit in etwa gleich großen Umlaufbahn-Außendurchmessern (D), wobei das Fahrwerk einen an einen Schlepper (1) ankoppelbaren Längsträger (4) und Bodenlaufräder (7) aufweist, und zwei in Arbeitsfahrtrichtung vordere Kreisel (K) über vordere Hubarme (8) an beiden Seiten des Längsträgers (4) in Querrichtung mit Zwischenabstand (Z) nebeneinander und der dritte, in etwa mittig hinter den Längsträger-Bodenlaufrädern (7) mit einem Hubarm (13) am Hinterende des Längsträgers (4), jeweils hochschwenkbar, angeordnet sind, und die zwei vorderen Kreisel (K) gegensinnig zur Mitte fördern, **dadurch gekennzeichnet, dass** in zumindest einer Arbeitsstellung des Kreiselschwaders (S) der über die vorderen Hubarme (8) definierte Zwischenabstand (Z) zwischen den Umlaufbahn-Außendurchmessern (D) der zwei vorderen Kreisel (K) quer zur Arbeitsfahrtrichtung größer ist als der halbe Umlaufbahn-Außendurchmesser (D) und bis maximal dem vollen Umlaufbahn-Außendurchmesser (D) des hinteren Kreisels (K) entspricht, und dass die Längsträger-Bodenlaufräder (7) lenkbar sind.

2. Kreiselschwader nach Anspruch 1, **dadurch gekennzeichnet, dass** der Zwischenabstand (Z) zwischen etwa 60 % und 90 % des Umlaufbahn-Außendurchmessers (D) entspricht.

3. Kreiselschwader nach Anspruch 1, **dadurch gekennzeichnet, dass** zumindest ein vorderer Hubarm (8) längenverstellbar ist, vorzugsweise beide vorderen Hubarme (8) teleskopierbar oder mit einer Schwingenkonstruktion ausgebildet sind.

4. Kreiselschwader nach Anspruch 1, **dadurch gekennzeichnet, dass** eine mechanische oder eine wenigstens einen Hydrozylinder aufweisende Längenverstelleinrichtung für den jeweiligen längenverstellbaren Hubarm (8) vorgesehen ist.

5. Kreiselschwader nach Anspruch 1, **dadurch gekennzeichnet, dass** der in Arbeitsfahrtrichtung gesehene Abstand zwischen den zwei vorderen Kreiseln (K) und dem hinteren Kreisel (K) etwa dem halben Umlaufbahn-Außendurchmesser (D) entspricht.

6. Kreiselschwader nach Anspruch 1, **dadurch gekennzeichnet, dass** zumindest einer der Kreisel (K) Zinkensteuer-Einrichtungen (10) aufweist.

7. Kreiselschwader nach Anspruch 1, **dadurch gekennzeichnet, dass** am hinteren Kreisel (K) oder dessen Hubarm (13) wenigstens ein Schwadelement (16) angeordnet ist.

8. Kreiselschwader nach Anspruch 1, **dadurch gekennzeichnet, dass** der hintere Hubarm (13) um eine in etwa in der Längsachse des Längsträgers (4) platzierte, annähernd senkrechte Achse (14) schwenkverstellbar ist, vorzugsweise mittels eines Hydrozylinders (17).

9. Kreiselschwader nach Anspruch 1, **dadurch gekennzeichnet, dass** die maximale Arbeitsbreite (A) aller drei Kreisel zwischen etwa 11,0 m und etwa 12,5 m beträgt, und dass die Breite eines von den zwei vorderen Kreiseln bildbaren Mittelschwades maximal dem Umlaufbahn-Außendurchmesser (D) entspricht, vorzugsweise bei einer maximalen Arbeitsbreite von etwa 11,0 m bis 12,5 m etwa 3,0 bis 4,5 m misst.

10. Kreiselschwader nach Anspruch 1, **dadurch gekennzeichnet, dass** die Längsträger-Bodenlaufräder (7) Nachlaufräder und an eine Zwangslenkvorrichtung (L) angeschlossen sind.

11. Kreiselschwader nach Anspruch 10, **dadurch gekennzeichnet, dass** die Zwangslenkvorrichtung (L) einen am Längsträger (4) um eine in etwa vertikale Achse (20) schwenkbaren, mit einem den Längsträger (4) schwenkbar führenden Traggestell (2) gekoppelten Lenkkörper (21) aufweist, der über Spurstangen (22) mit, vorzugsweise an einem Querträger (6) des Längsträgers (4), schwenkbaren Lenkhebeln (23) der Nachlaufachsen der Längsträger-Bodenlaufräder (7) gekoppelt ist.

12. Kreiselschwader nach wenigstens einem der vorhergehenden Ansprüche, **dadurch gekennzeichnet, dass** der hintere Hubarm (13) mittels der Zwangslenkvorrichtung (L) und, vorzugsweise, alternativ oder additiv über den doppelt wirkenden Hydrozylinder (17), entgegengesetzt zum Lenkeinschlag des Schleppers (1) schwenkverstellbar ist.

13. Kreiselschwader nach Anspruch 1, **dadurch gekennzeichnet, dass** der hintere Hubarm (13) längenverstellbar ist.

14. Kreiselschwader nach Anspruch 1, **dadurch gekennzeichnet, dass** der in Fahrtrichtung gesehene Abstand (B) zwischen der Anlenkung (3) des Längsträgers (4) und den Längsträger-Bodenlaufrädern (7) maximal dem zweifachen Umlaufbahn-Außendurchmesser (D) entspricht oder kürzer ist, und dass die zwei vorderen Kreisel (K) in Fahrtrichtung hinter der Längsmitte des Längsträgers (4) angeordnet sind.

## Claims

1. Rotary rake (S) comprising at an undercarriage three rotors (K) having about equal outer orbit diameters (D), wherein the undercarriage comprises a longitudinal beam (4) which can be linked to a tractor (1), and ground wheels (7), wherein among the rotors (K) provided two rotors (K) situated in the front in working travelling direction are arranged at both sides of the longitudinal beam on front side lifting arms (8) and in lateral direction side by side with an intermediate distance (Z) in-between while the third rotor (K) is arranged on a lifting arm (13) substantially centrally at the rear end of the longitudinal beam (4) and behind the longitudinal beam ground wheels (7), respectively for being pivoted upwardly, and among which rotors that two front side rotors (K) are adapted to convey with opposite rotary senses towards the centre of the rotary rake, **characterised in that** in at least one working position of the rotary rake the intermediate distance (Z) between the outer orbit diameters (D) of the two front side rotors (K) as defined by the front side lifting arms (8) is larger transverse to the working travelling direction than half of the outer orbit diameter (D) and amounts up to maximally the full outer orbit diameter (D) of the rear rotor (K), and that the longitudinal beam ground wheels (7) are steerable.

2. Rotary rake according to claim 1, **characterised in that** the intermediate distance (Z) amounts between about 60% and 90% of the outer orbit diameter (D).

3. Rotary rake according to claim 1, **characterised in that** at least one front side lifting arm (8) is adjustable in length, preferably, that both front side lifting arms (8) either are telescopic or have a linkage design.

4. Rotary rake according to claim 1, **characterised in that** for the respective front-side lifting arm (8) the length which is adjustable a length adjustment assembly is provided, which either is mechanical or comprises at least one hydro-cylinder.

5. Rotary rake according to claim 1, **characterised in that** the distance seen in working travelling direction between the two front side rotors (K) and the rear rotor (K) amounts about to half of the outer orbit diameter (D).

6. Rotary rake according to claim 1, **characterised in that** at least one of the rotors (K) comprises tine movement control assemblies (10).

7. Rotary rake according to claim 1, **characterised in that** at least one swath element (16) is arranged either at the rear rotor or at the lifting arm (13) of the rear rotor (K).

8. Rotary rake according to claim 1, **characterised in that** the rear lifting arm (13) is pivotably adjustable about a substantially vertical axis (14) situated about in the longitudinal axis of the longitudinal beam (4), preferably by a hydro-cylinder (17).

9. Rotary rake according to claim 1, **characterised in that** the maximum working width (A) of all three rotors (K) amounts to between about 11.0 metres and about 12.5 metres, and that the width of a centre swath which can be formed by the two front side rotors (K) maximally corresponds to the outer orbit diameter (D), preferably, measures in case of a maximum working width of about 11.0 metres to 12.5 metres about 3.0 metres to 4.5 metres.

10. Rotary rake according to claim 1, **characterised in that** the ground wheels (7) of the longitudinal beam are trailing wheels that are connected with a forced steering device (L).

11. Rotary rake according to claim 10, **characterised in that** the forced steering device (L) comprises a steering body (21) which is pivotable at the longitudinal beam (4) about an essentially vertical axis (20) and is coupled with a carrying frame (2) pivotably guiding the longitudinal beam (4), which steering body (21) is coupled via steering tie rods (22) with pivotable steering levers (23) of the trailing axes of the longitudinal beam ground wheels (7), the steering levers (23), preferably, being pivotable on a crossbeam (6) of the longitudinal beam (4).

12. Rotary rake according to at least one of the preceding claims, **characterised in that** the rear lifting arm (13) is adjustable to pivot counter to the steering angle of the tractor (1) by means of the forced steering device (L), and, preferably, alternatively or additively by means of the double-actuated hydro-cylinder (17).

13. Rotary rake according to claim 1, **characterised in that** the rear lifting arm (13) is adjustable in its length.

14. Rotary rake according to claim 1, **characterised in that** the distance (B) seen in working travelling direction between the tractor link (3) and the ground wheels (7) of the longitudinal beam (4) corresponds maximally to the twofold outer orbit diameter (D) or is shorter, and that the two front side rotors (K) are arranged in working travelling direction behind the longitudinal centre of the longitudinal beam (4).

## Revendications

1. Andaineur à rotors (S) avec trois rotors (K) qui sont disposés sur un châssis et qui présentent des diamètres extérieurs de rotation (D) à peu près égaux, étant précisé que le châssis comporte un longeron (4) apte à être attelé à un tracteur (1) et des roues de roulement au sol (7), et que deux rotors (K) avant, dans le sens de travail, sont disposés côte à côte avec un écartement (Z) dans le sens transversal, par l'intermédiaire de bras de relevage avant (8), des deux côtés du longeron (4), et le troisième à peu près au centre derrière les roues de roulement de longeron (7) avec un bras de relevage (13) à l'extrémité arrière du longeron (4), de manière à pouvoir pivoter chacun vers le haut, et que les deux rotors (K) avant acheminent en sens inverse vers le milieu, **caractérisé en ce que** dans au moins une position de travail de l'andaineur à rotors (S), l'écartement (Z) défini par l'intermédiaire des bras de relevage avant (8) entre les diamètres extérieurs de rotation (D) des deux rotors (K) avant, transversalement par rapport au sens de travail, est plus grand que la moitié du diamètre extérieur (D) et correspond au maximum au diamètre extérieur (D) total du rotor (K) arrière, et **en ce que** les roues de roulement au sol (7) sont orientables.

2. Andaineur à rotors selon la revendication 1, **caractérisé en ce que** l'écartement (Z) correspond à 60 % à 90 % du diamètre extérieur de rotation (D)

3. Andaineur à rotors selon la revendication 1, **caractérisé en ce qu'**au moins un bras de relevage avant (8) est réglable en longueur, de préférence les deux bras de relevage avant (8) ont une forme télescopique ou sont dotés d'une construction oscillante.

4. Andaineur à rotors selon la revendication 1, **caractérisé en ce qu'**il est prévu un dispositif de réglage en longueur qui est mécanique ou qui comporte au moins un vérin hydraulique, pour chaque bras de relevage (8) réglable en longueur.

5. Andaineur à rotors selon la revendication 1, **caractérisé en ce que** la distance, considérée dans le sens de travail, entre les deux rotors (K) avant et le rotor (K) arrière correspond à peu près à la moitié du diamètre extérieur de rotation (D).

6. Andaineur à rotors selon la revendication 1, **caractérisé en ce que** l'un au moins des rotors (K) comporte des dispositifs de commande de dents (10).

7. Andaineur à rotors selon la revendication 1, **caractérisé en ce qu'**au moins un élément d'andainage (16) est disposé sur le rotor (K) arrière ou sur le bras de relevage (13) de celui-ci.

8. Andaineur à rotors selon la revendication 1, **caractérisé en ce que** le bras de relevage arrière (13) est apte à pivoter sur un axe (14) approximativement vertical placé à peu près dans l'axe longitudinal du longeron (4), de préférence à l'aide d'un vérin hydraulique (17).

9. Andaineur à rotors selon la revendication 1, **caractérisé en ce que** la largeur de travail maximale (A) des trois rotors réunis est située entre à peu près 11,0 m et à peu près 12,5 m, et **en ce que** la largeur d'un andaineur central apte à être formé par les deux rotors avant correspond au maximum au diamètre extérieur de rotation (D), et mesure de préférence, pour une largeur de travail maximale d'environ 11,0 m à 12,5 m, environ 3,0 à 4,5 m.

10. Andaineur à rotors selon la revendication 1, **caractérisé en ce que** les roues de roulement de longeron (7) sont des roues suiveuses et sont reliées à un dispositif de guidage forcé (L).

11. Andaineur à rotors selon la revendication 10, **caractérisé en ce que** le dispositif de guidage forcé (L) comporte un corps de guidage (21) qui est apte à pivoter, sur le longeron (4), sur un axe (20) à peu près vertical, qui est accouplé à un châssis porteur (2) guidant de manière pivotante ledit longeron (4), et qui est accouplé par l'intermédiaire de barres d'accouplement (22) à des leviers de guidage (23), aptes à pivoter de préférence sur une traverse (6) du longeron (4), des axes suiveurs des roues de roulement de longeron (7).

12. Andaineur à rotors selon l'une au moins des revendications précédentes, **caractérisé en ce que** le bras de relevage arrière (13) est apte à pivoter, en sens inverse par rapport au braquage du tracteur (1), à l'aide du dispositif de guidage forcé (L) et de préférence, à titre de variante ou en supplément, par l'intermédiaire du vérin hydraulique à double effet (17).

13. Andaineur à rotors selon la revendication 1, **caractérisé en ce que** le bras de relevage arrière (13) est réglable en longueur.

14. Andaineur à rotors selon la revendication 1, **caractérisé en ce que** la distance (B), considérée dans le sens de marche, entre l'articulation (3) du longeron (4) et les roues de roulement de longeron (7), correspond au maximum au double du diamètre extérieur de rotation (D) ou est plus courte, et **en ce que** les deux rotors (K) avant sont disposés derrière le centre longitudinal du longeron (4), dans le sens de marche.
